# EUROPEAN PATENT SPECIFICATION

(11) **EP 0 333 660 B1**
(45) Date of publication and mention of the grant of the patent: **28.06.1995**
(21) Application number: 89810187.8
(22) Date of filing: 09.03.1989
(51) Int. Cl.: C08K 5/00, C08L 59/00

(54) **Stabilization systems for polyacetals**
Stabilisatorsysteme für Polyacetale
Systèmes de stabilisateurs pour polyacétals

(30) Priority: 18.03.1988 US 170187
(43) Date of publication of application: 20.09.1989
(73) Proprietor: CIBA-GEIGY AG, 4002 Basel (CH)
(72) Inventor: Capocci, Gerald A., Greenwich, CT 06431 (US); Zappia, Jean M., Mohegan Lake, NY 10547 (US)

(56) References cited:
- DE-A- 2 203 836
- DE-B- 2 540 206
- US-A- 3 152 101
- US-A- 3 660 438
- US-A- 3 940 365

## Description

The instant invention pertains to an acetal homo- or copolymer composition comprising a hindered phenol and a specific hydrazine compound or oxamido compound, to a method of stabilizing acetal homo- or copolymers as well as to a method of reducing color formation in acetal homo- or copolymers which contain a hindered phenol.

Polyacetal homo- and copolymers are well known to those skilled in the art. These materials are a suitable replacement for metal in numerous applications as a result of properties such as high strength and stiffness, good fatigue life, excellent resilience and thoughness, low moisture sensitivity, solvent resistance, excellent electrical characteristics and the capability to maintain these properties at elevated temperatures. The molecular structure of the polymer is that of a linear acetal, consisting of unbranched polyoxymethylene chains of substantial length, generally averaging more than 1000 -CH₂O- units. The acetal homopolymers are, for example, prepared by the polymerization of anhydrous formaldehyde or by the polymerization of trioxane. Acetal copolymers are typified, for example, by the polymerization product of trioxane and a cyclic ether such as ethylene oxide.

Since polyacetals are subject to oxidative and thermal degradation and discoloration, a wide variety of light stabilizers and antioxidants have been recommended for use therein. Included among the latter are diverse hindered phenolic antioxidants as reflected for example in U.S. Patents 3,285,855, 3,644,482; as well as various hydrazine compounds as reflected for example in U.S. Patents 3,110,696 and 3,660,438. Although these groups of compounds have provided antioxidant properties to polyacetals, levels of discoloration during storage and exposure particularly with the hindered phenols have proven to be unacceptably high for certain end uses. This potential deficiency is aggravated by the fact that the hindered phenol primary stabilizers are required in order to provide maximum thermal stability, the latter not being provided by the individual use of co-stabilizers even at higher concentration levels.

It has now been discovered that by including a special hydrazine or oxamido compound with a special hindered phenol in the proportions noted hereinafter as a stabilizing system for acetal homo- and copolymers, total stabilizing activity is achieved. Thus, the blend provides excellent stabilization against both oxidative and thermal degradation. Of primary importance, the combination provides significantly improved performance in the area where the individual hindered phenol is lacking, namely, in resistance to discoloration during storage and/or exposure to environmental conditions. In fact, contrary to expectation, the use of higher levels of hindered phenol in such combinations does not result in a concomitant increase in discoloration of the acetal polymer.

As previously noted, the applicable hindered phenols and hydrazine or oxamido compounds are known to those skilled in the art and have been identified as antioxidants for use in acetal polymers. Various blends of the hindered phenol and hydrazine components have been identified for use as stabilizer systems for polyolefins, polyurethans and various elastomers. In addition, U.S. Patent 3,940,365 describes moulding compositions based on poly(oxymethylene) which contain a phenolic antioxidant and a specific compound having a nucleating effect. However, the unexpected performance pattern achieved with the use of the instant blends clearly provide a distinct situation.

The instant invention pertains to an acetal homo- or copolymer which comprises
(a) a hindered phenol corresponding to the formula I, II, III, IV, V, VI or VII,

   R₁X-(CₐH₂ₐ)-Q (I)

   wherein R₁ is a group of the formula Ia, 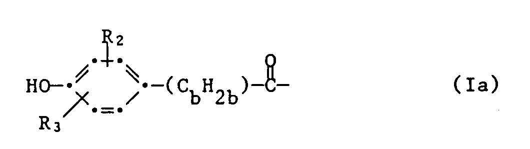 X is oxygen or sulfur, a is an integer from 6 to 30, preferably 6 to 18, b is an integer from 0 to 6, R₂ and R₃ are independently C₁-C₁₈alkyl, C₅-C₁₂cycloalkyl, phenyl or C₇-C₉aralkyl, and R₂ is also hydrogen, Q is hydrogen or -A-(C_{y}H_{2y})-R₄, A is oxygen, sulfur or 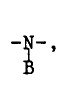 y is an integer from 2 to 20,
   B is C₁-C₄alkyl or C₁-C₄alkanoyl, and R₄ is hydrogen, hydroxy, C₁-C₄alkanoyloxy or a group of the formula Ib, 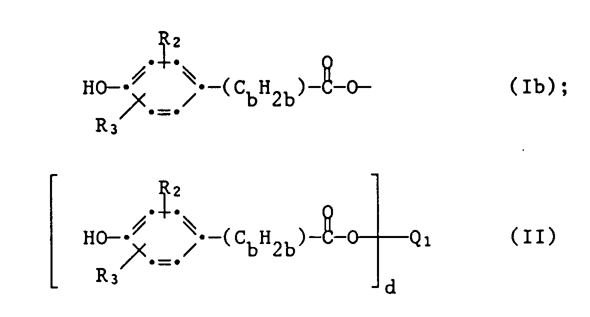 wherein R₂, R₃ and b are as defined above, d is an integer from 2 to 6, and Q₁ is a d-valent aliphatic hydrocarbon of 1 to 18 carbon atoms, a d-valent aromatic or aromatic aliphatic hydrocarbon of 6 to 20 carbon atoms or a group of the formula IIa 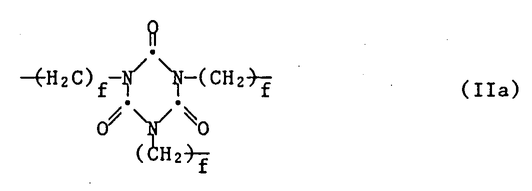 wherein f is an integer from 1 to 4; 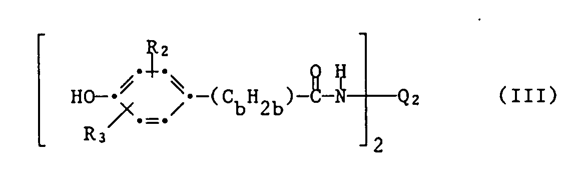 wherein R₂, R₃ and b are as defined above, and Q₂ is C₁-C₁₈alkylene; 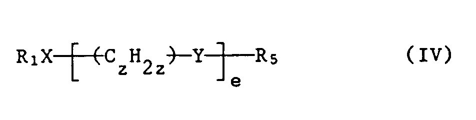 wherein R₁ and X are as defined above, z is an integer from 2 to 6, e is an integer from 3 to 40, preferably 3 to 10, Y is oxygen or sulfur, and R₅ is hydrogen, C₁-C₄alkyl or a group of the formula Ia; 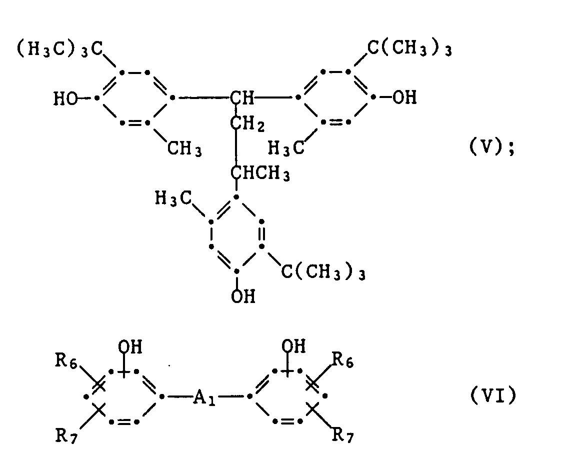 wherein R₆ and R₇ are independently C₁-C₁₈alkyl, C₅-C₁₂cycloalkyl, phenyl or C₇-C₉aralkyl, and R₆ is also hydrogen, and A₁ is a group 〉C(R₈)R₉ wherein R₈ and R₉ are independently hydrogen or C₁-C₆alkyl; 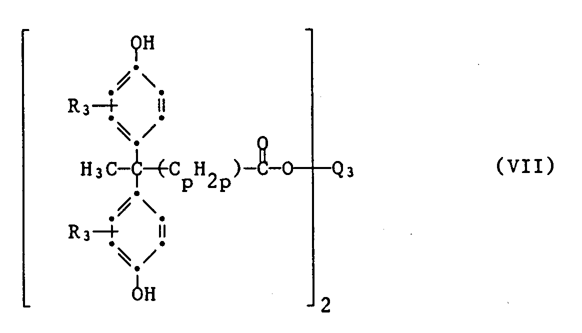 wherein R₃ is as defined above, p is 1 or 2 and Q₃ is C₂-C₁₀alkylene; and
(b) a hydrazine compound corresponding to the formula IX 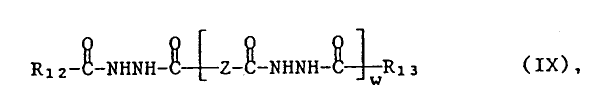 wherein R₁₂ and R₁₃ are independently C₁-C₁₈alkyl, C₁-C₁₈alkyloxy, phenyl, C₇-C₉aralkyl or a group of the formula VIII, 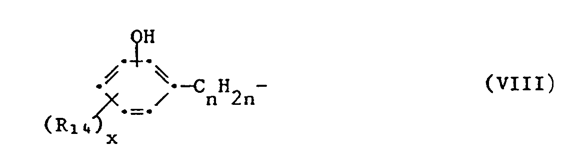 Z is a direct bond, C₁-C₁₈alkylene or phenylene, the radicals R₁₄ are independently C₁-C₁₈alkyl, C₅-C₁₂cycloalkyl, phenyl or C₇-C₉aralkyl, w is 0 or 1, x is an integer from 0 to 4 and n is an integer from 0 to 6, with the proviso that x is different from zero, when w is 1; or an oxamido compound of the formula XI 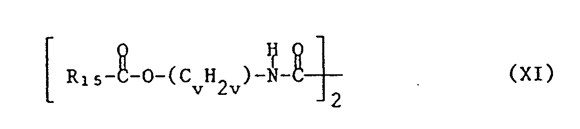 wherein R₁₅ is C₁-C₁₈alkyl, phenyl, C₇-C₉aralkyl or a group of the formula VIII and v is an integer from 1 to 6, in particular 2 to 6; the weight ratio of the components (a):(b) is 20:1 to 1:10, with the proviso that the component (b) is not oxalyldihydrazide-salicylic acid bishydrazide if the component (a) is bis(z-hydroxy-3-tert.butyl-5-methyl-phenyl)-methane.

Alkyl is for example methyl, ethyl, propyl, n-butyl, tert-butyl, pentyl, hexyl, heptyl, octyl, 1,1,3,3-tetramethylbutyl, nonyl, decyl, undecyl, dodecyl or octadecyl.

C₁-C₁₈alkyloxy is for example methoxy, ethoxy, propoxy, n-butoxy, tert-butoxy, pentyloxy, hexyloxy, heptyloxy, octyloxy, nonyloxy, decyloxy, undecyloxy, dodecyloxy or octadecyloxy.

C₁-C₄alkanoyl is for example acetyl, propionyl or butyryl.

C₁-C₄alkanoyloxy is for example acetyloxy, propionyloxy or butyryloxy.

C₅-C₁₂cycloalkyl is for example cyclopentyl, cyclohexyl or cyclooctyl. Cyclohexyl is preferred.

C₇-C₉aralkyl is in particular C₇-C₉phenylalkyl, for example benzyl, α-methylbenzyl, α,α-dimethylbenzyl or phenylethyl. Benzyl is preferred.

C₁-C₁₈alkylene is for example methylene, dimethylene, trimethylene, tetramethylene, pentamethylene, hexamethylene, heptamethylene, octamethylene, decamethylene, dodecamethylene or octadecamethylene.

For compounds of formula II, Q₁ as a bivalent hydrocarbon can be e.g. straight-chain or branched C₂-C₁₀alkylene or C₂-C₆alkylidene such as, for example, ethylene, ethylidene, trimethylene, tetramethylene, pentamethylene, 2,2-dimethylpropane-1,3-diyl, hexamethylene, heptamethylene, octamethylene, decamethylene, 2,2-pentamethylene-propane-1,3-diyl, and cyclohexylene or C₆-C₁₀arylene such as, for example, phenylene, phenylene substituted by one or more C₁-C₄alkyl, or naphthylene.

Q₁ as a trivalent, tetravalent or pentavalent hydrocarbon can be e.g. a group of the following formulae 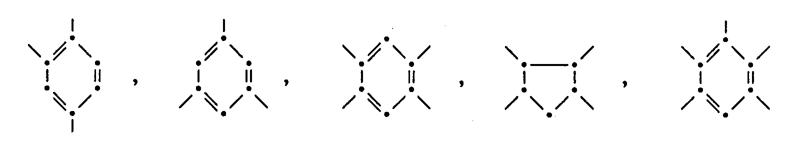
or alkanetriyl of 3 to 6 carbon atoms, such as e.g. glyceryl or trimethylylpropane or alkanetetrayl of 4 to 6 carbon atoms such as e.g. pentaerythrityl.

Formula Ia represents preferably one of the following groups:

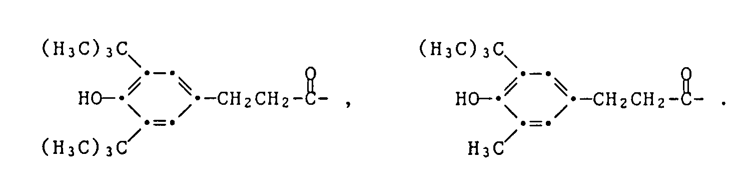

Formula Ib is in particular one of the groups

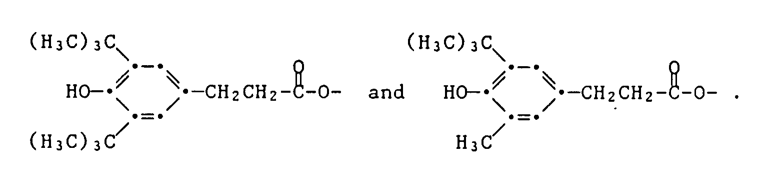

In the group of the formula IIa f is preferably 2.

Those compositions are preferred, wherein component (a) is a compound of the formula I, II, III, IV, V or VI, in particular I, II, III or IV.

Z is preferably a direct bond or C₁-C₆alkylene.

Compounds of formula I which are preferred exhibit X as oxygen, b as an integer from 0 to 2, R₂ and R₃ as alkyl of 1 to 8 carbon atoms, A as oxygen, y as 2, R₄ as hydrogen or a group of the formula Ib. Particularly preferred are those compounds wherein R₂ and R₃ are tert-butyl positioned ortho to the hydroxyl group and b is 2. A specific compound of preference is octadecyl 3-(3′,5′-di-tert-butyl-4′-hydroxyphenyl)propionate.

Compounds of formula II which are preferred exhibit R₂ and R₃ as C₁-C₈-alkyl, in particular tert-butyl positioned ortho to the hydroxyl group, b as 2, d as 2 or 4 and Q₁ as C₂-C₁₀alkylene or pentaerythrityl. Specific compounds of preference are 1,6-hexamethylene bis[3′,5′-di-tert-butyl-4′-hydroxyhydrocinnamate] and tetrakis[methylene 3-(3′,5′-di-tert-butyl-4′-hydroxyphenyl)propionate]methane.

Compounds of formula III which are preferred exhibit R₂ and R₃ as C₁-C₈alkyl and preferably tert-butyl positioned ortho to the hydroxyl group, b as 2 and Q₂ as C₂-C₆alkylene. The specific compound of preference is N,N′-hexamethylene bis[3,5-di-tert-butyl-4-hydroxyhydrocinnamamide].

Compounds of formula IV which are preferred exhibit X and Y as oxygen, b as an integer from 0 to 2, R₂ and R₃ as alkyl of 1 to 8 carbon atoms, z as 2, e as an integer from 3 to 20, and R₅ as a group of the formula Ia. Particularly preferred are those compounds wherein R₂ and R₃ are tert-butyl positioned ortho to the hydroxyl group. A specific compound of preference is triethylene glycol bis[3-(3′,5′-di-tert-butyl-4′-hydroxyphenyl)-propionate].

Compounds of formula VI which are preferred exhibit R₆ and R₇ as methyl or tert-butyl and R₈ and R₉ as hydrogen or methyl. Specific compounds of preference are bis[2-hydroxy-3-tert-butyl-5-methylphenyl]methane and 1,1-bis[2′-hydroxy-3′,5′-di-tert-butylphenyl]ethane.

A preferred compound of formula VII is

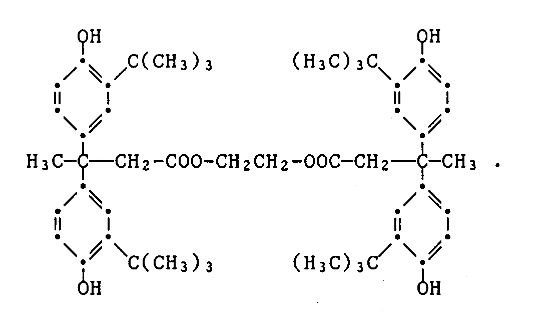

Preferred compositions of the invention are those wherein component (a) is octadecyl 3-(3′,5′-di-tert-butyl-4-hydroxyphenyl)propionate, 1,6-hexamethylene bis[3′,5′-di-tert-butyl-4′-hydroxyhydrocinnamate], tetrakis[methylene 3-(3′,5′-di-tert-butyl-4′-hydroxyphenyl)propionate]methane,
N,N′-hexamethylene bis[3,5-di-tert-butyl-4-hydroxyhydrocinnamamide] or triethylene glycol bis[3-(3′,5′-di-tert-butyl-4′-hydroxyphenyl)propionate].

According to a further preferred embodiment in component (b) R₁₂ and R₁₃ are independently C₁-C₁₈alkyl or a group of formula VIII, Z is a direct bond or C₁-C₆alkylene and the radicals R₁₄ are independently C₄-C₈alkyl, C₅-C₆cycloalkyl, phenyl or benzyl.

Preferred groups of the formula VIII are those wherein the OH group is either in the ortho- or para-position. When the OH group is in the para-position, the groups of the formula VIII preferably contain two R₁₄ radicals positioned ortho to the hydroxyl group, which are alkyl of 4 to 8 carbon atoms and most preferably tert-butyl.

Representative compounds of component (b) include

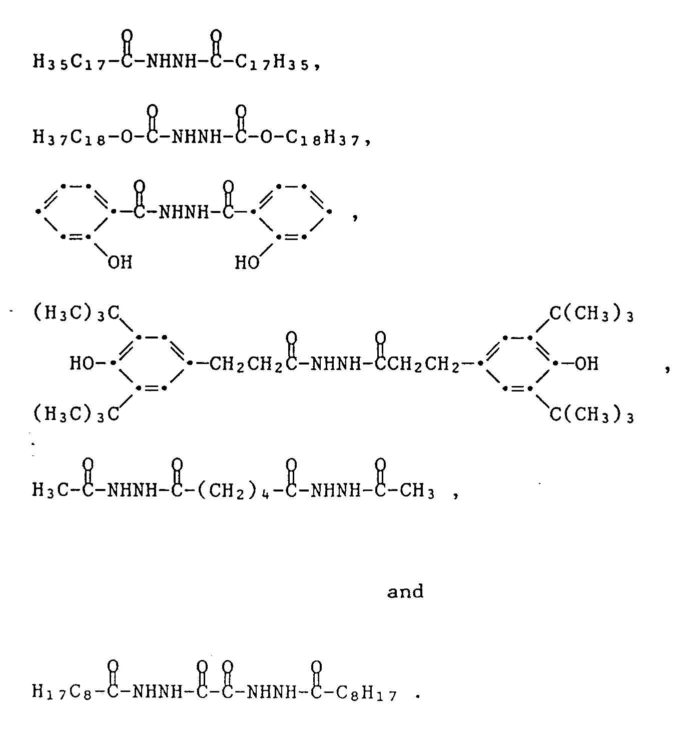

Another preferred composition of the instant invention contains as component (a) 1,6-hexamethylene bis[3',5'-di-tert-butyl-4'-hydroxyhydrocinnamate] and as component (b) N,N'-bis[β-(3,5-di-tert-butyl-4-hydroxyphenyl)propionyl]hydrazine. The combination of these components particularly reveals a performance improvement in the hindered phenol.

Preferred compositions are also those which contain as components (b) a compound of formula XI.

In compounds of the formula XI R₁₅ is preferably a group of the formula VIII with the OH radical in the para-position and two R₁₄ groups positioned ortho to the hydroxyl group, R₁₄ being preferably tert-butyl. A representative compound is 2,2'-oxamido-bis[ethyl 3-(3',5'-di-tert-butyl-4'-hydroxyphenyl)propionate] (®NAUGARD XL-1 from Uniroyal).

Methods for preparing the compounds of component (a) are well known to those skilled in the art. Specific reference is made to U.S. Pat. Nos. 3,285,855, 3,531,483, 3,584,047, 3,632,553, 3,644,482, 3,944,594, 4,032,562 and 4,507,420 for information regarding the phenols of formula I-IV and VI and their methods of preparation. The compound of formula V is ^{®}TOPANOL CA available from ICI Corp. The compounds of formula VII can be prepared as described, for example, in U.S. Patent 3,960,928.

The compounds of component (b) and methods for their preparation are disclosed in U.S. Pat. Nos. 3,110,696 and 3,660,438.

In general, the blends of the present invention are employed in from about 0.01 to about 10 % by weight of the stabilized composition, although this will vary with the particular application. An advantageous range is from about 0.05 to about 2 %, and especially 0.1 to about 1 %. The weight ratio of component (a) to component (b) ranges from 20:1 to 1:10, preferably 9:1 to 1:9, and most preferably 2-3:1.

The stabilizers of the instant invention, either individually or in combination, may readily be incorporated into the acetal polymers by conventional techniques, at any convenient stage prior to the manufacture of shaped articles therefrom. For example, the stabilizers may be mixed with the polymer in dry powder form, or a suspension or emulsion of the stabilizer may be mixed with a solution, suspension, or emulsion of the polymer. The resulting stabilized polymer compositions of the invention may optionally also contain various conventional additives. Included among these additives are basic co-stabilizers such as calcium citrate, melamine, cyanoguanidine, polyamides, alkali and alkaline earth metal salts of high fatty acids, and amines; phosphites and phosphonites; peroxide-destroying compounds such as esters of thiodipropionic acid.

The instant invention also relates to a method of stabilizing an acetal homo- or copolymer against thermal or oxidative degradation, which comprises incorporating into said acetal components (a) and (b) as defined above.

Another embodiment of the instant invention is a method of reducing color formation in acetal homo- or copolymers containing a hindered phenol (component (a)), which comprises incorporating into said acetal homo- or copolymers component (b) as defined above.

The following examples illustrate the embodiments of this invention.

### Test compounds

A - 1,6-hexamethylene bis[3',5'-di-tert-butyl-4'-hydroxyhydrocinnamate]
B - triethylene glycol bis[3-tert-butyl-5-methyl-4-hydroxyphenyl]propionate
C - tetrakis[methylene 3-(3',5'-di-tert-butyl-4'-hydroxyphenyl)propionate]methane
D - N,N'-hexamethylene bis[3,5-di-tert-butyl-4-hydroxyhydrocinnamamide]
E - octadecyl 3-(3',5'-di-tert-butyl-4'-hydroxyphenyl)propionate
F - 1,3,5-tris[3',5'-di-tert-butyl-4'-hydroxybenzoyloxyethyl]isocyanurate
G - 1,1,3-tris[3′-tert-butyl-4′-hydroxy-5′-methylphenyl]butane
H - 1,1-bis[3′-tert-butyl-4′-hydroxy-5′-methylphenyl]butane
J - N,N′-bis[β-(3,5-di-tert-butyl-4-hydroxyphenyl)propionyl]hydrazine
K - 2,2′-oxamido-bis[ethyl 3-(3′,5′-di-tert-butyl-4′-hydroxyphenyl)propionate]

Example 1: The additives in the indicated concentrations are dry blended into polyoxymethylene resin [trioxane-ethylene oxide copolymer (®CELCON from Celanase) with base stabilization system of 0.2 % bis-stearamide and 0.1 % calcium hydroxystearate] and extruder compounded (single extrusion) into pellets at 185°C. The pellets are stored in a dark area in glass petri dishes at ambient temperatures for the indicated time periods and specimen yellowness index (YI) is determined according to ASTM D 1925.

| Components | Conc. (% by wt.) | Yellowness Index | | |
|---|---|---|---|---|
| | | Initial | 64 Days | 131 Days |
| A | 0.5 | 3.6 | 10.4 | 11.3 |
| J | 0.5 | 3.6 | 2.7 | 2.3 |
| A/J | 0.25/0.25 | 2.0 | 1.5 | 1.3 |
| A/J | 0.3/0.2 | 1.5 | 1.2 | 1.2 |
| A/J | 0.35/0.15 | 2.3 | 2.0 | 1.8 |
| A/J | 0.4/0.1 | 1.9 | 1.5 | 1.4 |
| A/J | 0.45/0.05 | 1.4 | 1.2 | 1.5 |
| A/J | 0.475/0.025 | 1.2 | 1.0 | 1.0 |
| A/J | 0.2/0.3 | 1.0 | 1.4 | 1.3 |
| A/J | 0.15/0.35 | 2.6 | 1.8 | 1.6 |
| A/J | 0.1/0.4 | 2.7 | 2.1 | 2.0 |
| A/J | 0.05/0.45 | 2.2 | 1.7 | 1.6 |
| K | 0.5 | 1.7 | 1.7 | 2.0 |
| A/K | 0.25/0.25 | 1.0 | 1.9 | 2.1 |
| A/K | 0.35/0.15 | 1.4 | 2.8 | 3.2 |
| A/K | 0.45/0.05 | 1.7 | 3.0 | 3.4 |
| A/K | 0.15/0.35 | 1.6 | 2.3 | 2.6 |
| A/K | 0.05/0.45 | 1.4 | 2.0 | 2.4 |

These data thus indicate the high resistance to discoloration during dark storage as exhibited by the stabilized systems of this invention. In addition, significant performance improvement is exhibited relative to component A, the more highly discoloration antioxidant.

Example II: The procedures of Example I are repeated with the exception of certain of the components of the base acetal and the aging conditions. Thus, the formulated systems are subjected to oven aging at 80°C and to storage in water at 70°C.

| COSTABILIZER 0.3 % Ca STEARATE | Oven aging at 80°C ΔYI at 20 Weeks | Storage in Water at 70°C YI at 20 Weeks |
|---|---|---|
| 0.3 % A | 18.7 | 33.4 |
| 0.3 % A + 0.01 % J | 13.1 | 17.3 |
| 0.3 % A + 0.03 % J | 12.0 | 14.7 |
| 0.3 % A + 0.05 % J | 12.8 | 13.0 |

| COSTABILIZER 0.15 % Ca CITRATE | | |
|---|---|---|
| 0.3 % A | 18.0 | 10.2 |
| 0.3 % A + 0.01 % J | 13.1 | 8.3 |
| 0.3 % A + 0.03 % J | 14.5 | 8.6 |
| 0.3 % A + 0.05 % J | 12.5 | 8.2 |

| COSTABILIZER 0.3 % MELAMINE | | |
|---|---|---|
| 0.3 % A | 10.6 | 9.8 |
| 0.3 % A + 0.01 % J | 9.0 | 7.5 |
| 0.3 % A + 0.03 % J | 8.1 | 9.0 |
| 0.3 % A + 0.05 % J | 8.1 | 8.3 |

| COSTABILIZER 0.3 % CYANOGUANIDINE | | |
|---|---|---|
| 0.3 % A | 10.5 | 16.4 |
| 0.3 % A + 0.01 % J | 9.0 | 7.2 |
| 0.3 % A + 0.03 % J | 10.2 | 7.3 |
| 0.3 % A + 0.05 % J | 10.1 | 6.0 |

Example III: Example I is repeated utilizing a variety of phenolic antioxidants.

| Additive | Conc. (% by wt.) | YI Initial | YI 45 Days |
|---|---|---|---|
| A | 0.5 | 4.0 | 16.2 |
| A/J | 0.4/0.1 | 4.1 | 5.0 |
| B | 0.5 | 3.8 | 4.0 |
| B/J | 0.4/0.1 | 2.2 | 2.8 |
| C | 0.5 | 3.8 | 13.0 |
| C/J | 0.4/0.1 | 2.5 | 4.0 |
| D | 0.5 | 3.0 | 8.0 |
| D/J | 0.4/0.1 | 3.0 | 4.1 |
| E | 0.5 | 4.1 | 26.6 |
| E/J | 0.4/0.1 | 5.5 | 7.2 |
| F | 0.5 | 9.2 | 14.5 |
| F/J | 0.4/0.1 | 8.5 | 11.1 |
| G | 0.5 | 11.1 | 14.9 |
| G/J | 0.4/0.1 | 5.4 | 7.2 |
| H | 0.5 | 12.0 | 21.8 |
| H/J | 0.4/0.1 | 5.6 | 7.0 |
| J | 0.5 | 4.1 | 5.3 |

Example IV: Example III is repeated with the exception that the resulting samples are subjected to oven aging for five days at 110°C.

| Additive | Conc. (% by wt.) | YI - Oven Aged |
|---|---|---|
| C | 0.5 | 23.3 |
| C/J | 0.475/0.025 | 17.7 |
| E | 0.5 | 23.2 |
| E/J | 0.475/0.025 | 13.3 |
| F | 0.5 | 39.7 |
| F/J | 0.475/0.025 | 25.9 |
| J | 0.5 | 28.3 |

It is thus seen that the instant combination of antioxidants provides significantly improved stabilization effectiveness in acetal polymers. This improvement is particularly evident in a key indicia of stabilization, namely, resistance to discoloration.

In summary, this invention provides antioxidant systems for stabilizing acetal polymers against oxidative and thermal degradation. Variations may be made in various elements thereof.

## Claims

1. An acetal homo- or copolymer composition which comprises
(a) a hindered phenol corresponding to the formula I, II, III, IV, V, VI or VII,
R₁X-(CₐH₂ₐ)-Q (I)
wherein R₁ is a group of the formula Ia, 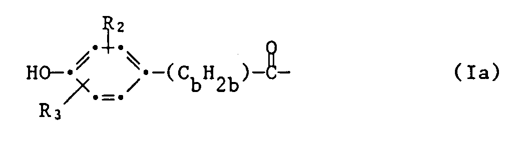 X is oxygen or sulfur, a is an integer from 6 to 30, b is an integer from 0 to 6, R₂ and R₃ are independently C₁-C₁₈alkyl, C₅-C₁₂cycloalkyl, phenyl or C₇-C₉aralkyl, and R₂ is also hydrogen, Q is hydrogen or -A-(C_{y}H_{2y})-R₄, A is oxygen, sulfur or 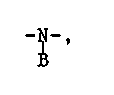 y is an integer from 2 to 20,
B is C₁-C₄alkyl or C₁-C₄alkanoyl, and R₄ is hydrogen, hydroxy, C₁-C₄alkanoyloxy or a group of the formula Ib, 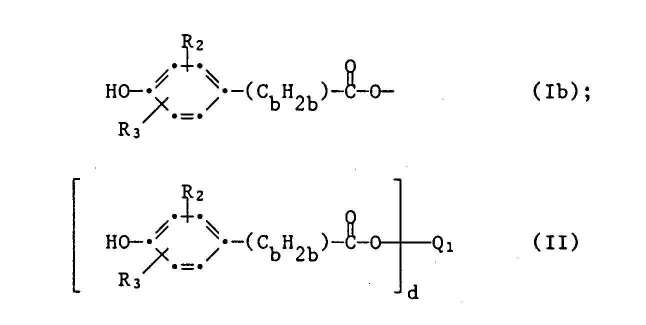 wherein R₂, R₃ and b are as defined above, d is an integer from 2 to 6, and Q₁ is a d-valent aliphatic hydrocarbon of 1 to 18 carbon atoms, a d-valent aromatic or aromatic aliphatic hydrocarbon of 6 to 20 carbon atoms or a group of the formula IIa 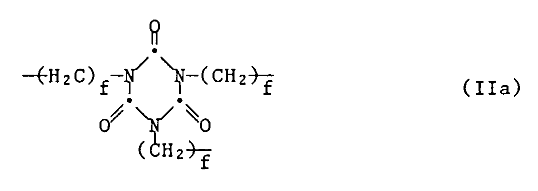 wherein f is an integer from 1 to 4; 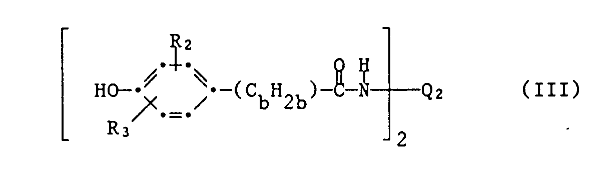 wherein R₂, R₃ and b are as defined above, and Q₂ is C₁-C₁₈alkylene; 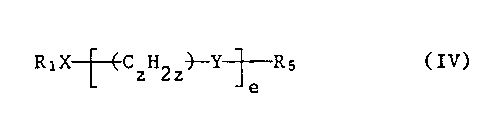 wherein R₁ and X are as defined above, z is an integer from 2 to 6, e is an integer from 3 to 40, Y is oxygen or sulfur, and R₅ is hydrogen, C₁-C₄alkyl or a group of the formula Ia; 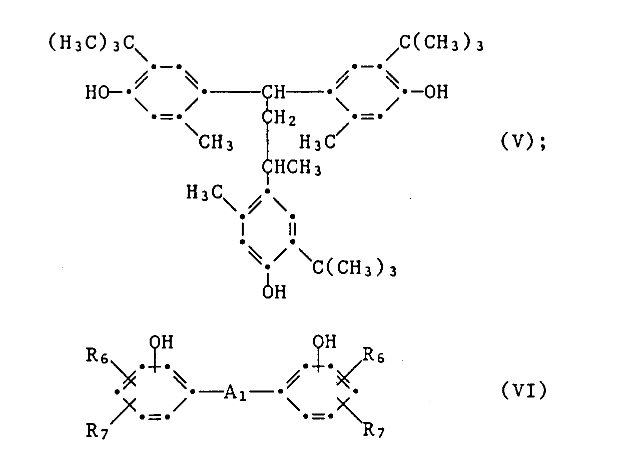 wherein R₆ and R₇ are independently C₁-C₁₈alkyl, C₅-C₁₂cycloalkyl, phenyl or C₇-C₉aralkyl, and R₆ is also hydrogen, and A₁ is a group 〉C(R₈)R₉ wherein R₈ and R₉ are independently hydrogen or C₁-C₆alkyl; 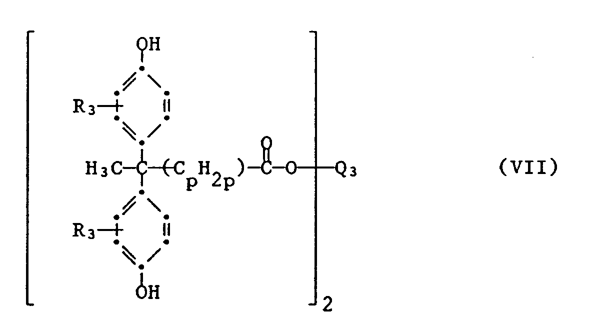 wherein R₃ is as defined above, p is 1 or 2 and Q₃ is C₂-C₁₀alkylene; and
(b) a hydrazine compound corresponding to the formula IX 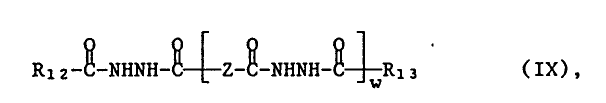 wherein R₁₂ and R₁₃ are independently C₁-C₁₈alkyl, C₁-C₁₈alkyloxy, phenyl, C₇-C₉aralkyl or a group of the formula VIII, 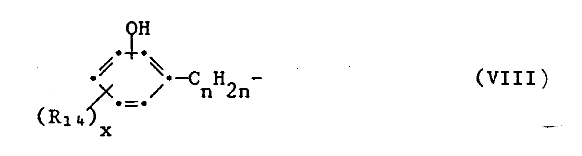 Z is a direct bond, C₁-C₁₈alkylene or phenylene, the radicals R₁₄ are independently C₁-C₁₈alkyl, C₅-C₁₂cycloalkyl, phenyl or C₇-C₉aralkyl, w is 0 or 1, x is an integer from 0 to 4 and n is an integer from 0 to 6, with the proviso that x is different from zero, when w is 1; or an oxamido compound of the formula XI 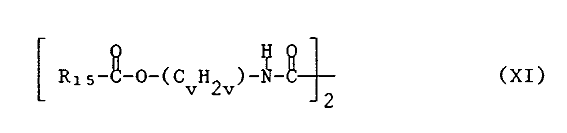 wherein R₁₅ is C₁-C₁₈alkyl, phenyl, C₇-C₉aralkyl or a group of the formula VIII and v is an integer from 1 to 6; the weight ratio of the components (a):(b) is 20:1 to 1:10, with the proviso that the component (b) is not oxalyldihydrazide-salicylic acid bishydrazide if the component (a) is bis(z-hydroxy-3-tert.butyl-5-methyl-phenyl)-methane.

2. The composition of claim 1, wherein said hindered phenol corresponds to the formula I, II, III, IV, V or VI.

3. The composition of claim 1, wherein said hindered phenol corresponds to formula I.

4. The composition of claim 1, wherein said hindered phenol corresponds to formula I and X is oxygen, b is an integer from 0 to 2, R₂ and R₃ are independently C₁-C₈alkyl, A is oxygen, y is 2 and R₄ is hydrogen or a group of the formula Ib.

5. The composition of claim 4, wherein R₂ and R₃ are tert-butyl positioned ortho to the hydroxyl group and b is 2.

6. The composition of claim 1, wherein said hindered phenol corresponds to formula II.

7. The composition of claim 1, wherein said hindered phenol corresponds to formula II and R₂ and R₃ are independently C₁-C₈alkyl, b is 2, d is 2 or 4 and Q₁ is C₂-C₁₀alkylene or pentaerythrityl.

8. The composition of claim 1, wherein said hindered phenol corresponds to formula III.

9. The composition of claim 1, wherein said hindered phenol corresponds to formula III and R₂ and R₃ are independently C₁-C₈alkyl, b is 2 and Q₂ is C₂-C₆alkylene.

10. The composition of claim 1, wherein said hindered phenol corresponds to formula IV.

11. The composition of claim 1, wherein said hindered phenol corresponds to formula IV and X and Y are oxygen, b is an integer from 0 to 2, R₂ and R₃ are independently C₁-C₈alkyl, z is 2, e is an integer from 3 to 20 and R₅ is a group of the formula Ia.

12. The composition of claim 11, wherein R₂ and R₃ are tert-butyl positioned ortho to the hydroxyl group.

13. The composition of claim 1, wherein said hindered phenol is octadecyl 3-(3',5'-di-tert-butyl-4'-hydroxyphenyl)propionate, 1,6-hexamethylene bis[3',5'-di-tert-butyl-4'-hydroxyhydrocinnamate], tetrakis[methylene 3-(3',5'-di-tert-butyl-4'-hydroxyphenyl)propionate]-methane,
N,N'-hexamethylene bis[3,5-di-tert-butyl-4-hydroxyhydrocinnamamide] or triethylene glycol bis[3-(3',5'-di-tert-butyl-4'-hydroxyphenyl)propionate].

14. The composition of claim 1, wherein in component (b) R₁₂ and R₁₃ are independently C₁-C₁₈alkyl or a group of formula VIII, Z is a direct bond or C₁-C₆alkylene and the radicals R₁₄ are independently C₄-C₈alkyl, C₅-C₆cycloalkyl, phenyl or benzyl.

15. The composition of claim 14, wherein the OH in the group of the formula VIII is positioned either in the 2- or 4-position.

16. The composition of claim 15, wherein the OH in the group of the formula VIII is in the para-position, x is 2 and each R₁₄ is tert-butyl positioned ortho to the OH group.

17. The composition of claim 1, wherein said hydrazine is

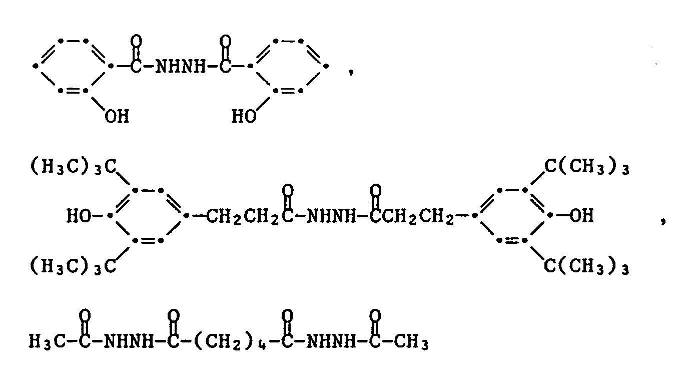

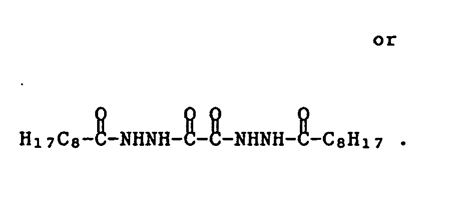

18. The composition of claim 1, wherein said hindered phenol is 1,6-hexamethylene bis[3,5-di-tert-butyl-4-hydroxyhydrocinnamate] and said hydrazine compound is N,N'-bis[β-(3,5-di-tert-butyl-4-hydroxyphenyl)propionyl]hydrazine.

19. The composition of claim 1 comprising as component (b) a compound of formula XI.

20. The composition of claim 19, wherein component (b) is 2,2'-oxamido-bis[ethyl 3-(3',5'-di-tert-butyl-4'-hydroxyphenyl)propionate].

21. The composition of claim 1 which additionally contains a basic co-stabilizer selected from the group consisting of calcium citrate, melamine, cyanoguanidine, polyamide's, alkali and alkaline earth metal salts of fatty acids, amines, phosphites, phosphonites and peroxide-destroying compounds.

22. A method of stabilizing an acetal homo- or copolymer against thermal or oxidative degradation, which comprises incorporating into said acetal components (a) and (b) according to claim 1.

23. A method of reducing color formation in acetal homo- or copolymers containing component (a) according to claim 1, which comprises incorporating into said acetal homo- or copolymers component (b) as defined in claim 1.

## Patentansprüche

1. Acetal-Homo- oder Copolymerzusammensetzung, die umfaßt
(a) ein gehindertes Phenol, das der Formel I, II, III, IV, V, VI oder VII entspricht
R₁X-(CₐH₂ₐ)-Q (I)
worin R₁ eine Gruppe der Formel Ia ist, 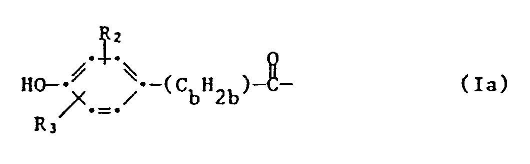 X ist Sauerstoff oder Schwefel, a ist eine ganze Zahl von 6 bis 30, b ist eine ganze Zahl von 0 bis 6, R₂ und R₃ sind unabhängig C₁-C₁₈-Alkyl, C₅-C₁₂-Cycloalkyl, Phenyl oder C₇-C₉-Aralkyl, und R₂ ist ebenfalls Wasserstoff, Q ist Wasserstoff oder -A-(C_{y}H_{2y})-R₄, A ist Sauerstoff, Schwefel oder 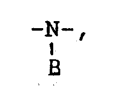 y ist eine ganze Zahl von 2 bis 20,
B ist C₁-C₄-Alkyl oder C₁-C₄-Alkanoyl, und R₄ ist Wasserstoff, Hydroxy, C₁-C₄-Alkanoyloxy oder eine Gruppe der Formel Ib, 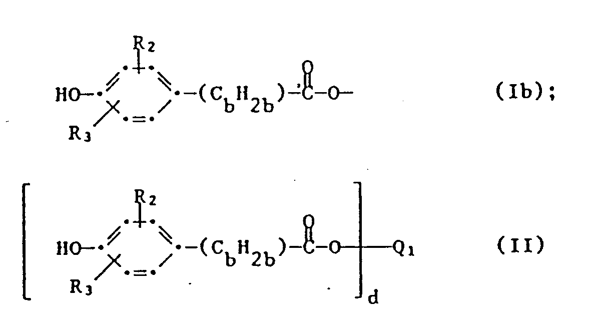 worin R₂, R₃ und b die oben definierte Bedeutung haben, d ist eine ganze Zahl von 2 bis 6, und Q₁ ist ein d-wertiger aliphatischer Kohlenwasserstoff mit 1 bis 18 Kohlenstoffatomen, ein d-wertiger aromatischer oder aromatisch-aliphatischer Kohlenwasserstoff von 6 bis 20 Kohlenstoffatomen oder eine Gruppe der Formel IIa, 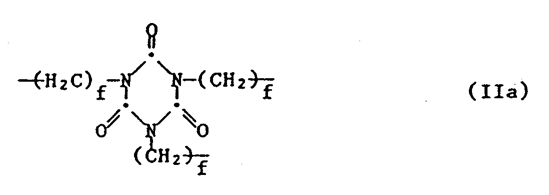 worin f eine ganze Zahl von 1 bis 4 ist, 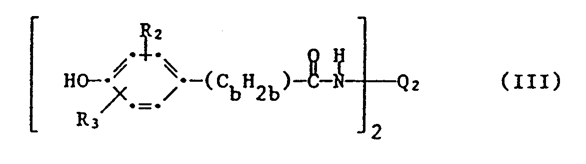 worin R₂, R₃ und b wie oben definiert ist, und Q₂ ist C₁-C₁₈-Alkylen; 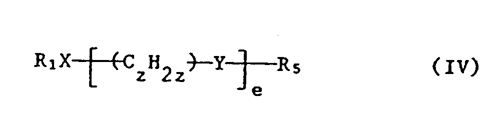 worin R₁ und X die oben definierte Bedeutung haben, z ist eine ganze Zahl von 2 bis 6, e ist eine ganze Zahl von 3 bis 40, Y ist Sauerstoff oder Schwefel, und R₅ ist Wasserstoff, C₁-C₄-Alkyl oder eine Gruppe der Formel Ia; 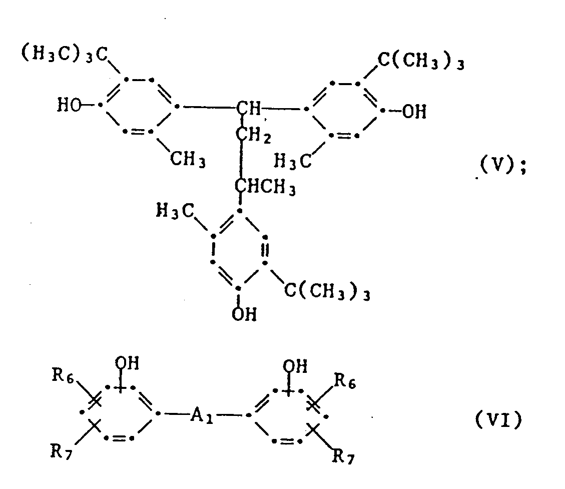 worin R₆ und R₇ unabhängig C₁-C₁₈-Alkyl, C₅-C₁₂-Cycloalkyl, Phenyl oder C₇-C₉-Aralkyl sind, und R₆ ist ebenfalls Wasserstoff, und A₁ ist eine Gruppe 〉C(R₈)R₉, worin R₈ und R₉ unabhängig Wasserstoff oder C₁-C₆-Alkyl darstellen; 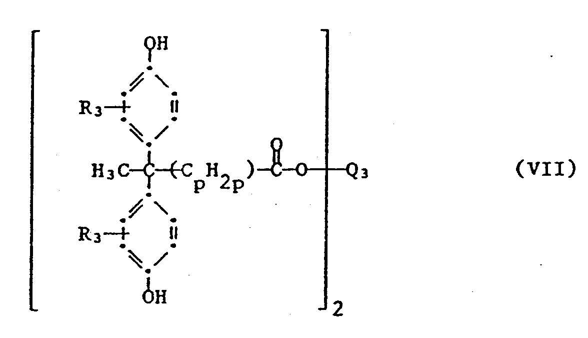 worin R₃ wie oben definiert ist, p ist 1 oder 2, und Q₃ ist C₂-C₁₀-Alkylen; und
(b) eine Hydrazinverbindung, die der Formel IX entspricht 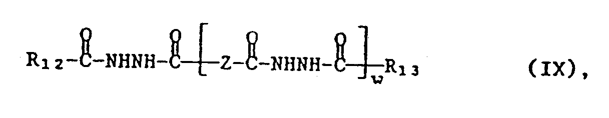 worin R₁₂ und R₁₃ unabhängig C₁-C₁₈-Alkyl, C₁-C₁₈-Alkyloxy, Phenyl, C₇-C₉-Aralkyl oder eine Gruppe der Formel VIII sind 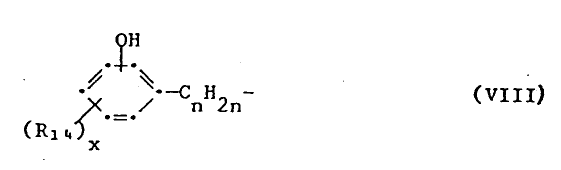 Z ist eine Direktbindung, C₁-C₁₈-Alkylen oder Phenylen, die Reste R₁₄ sind unabhängig C₁-C₁₈-Alkyl, C₅-C₁₂-Cycloalkyl, Phenyl oder C₇-C₉-Aralkyl, w ist 0 oder 1, x ist eine ganze Zahl von 0 bis 4, und n ist eine ganze Zahl von 0 bis 6, mit der Maßgabe, daß x nicht null ist, wenn w die Bedeutung 1 hat; oder eine Oxamidoverbindung der Formel XI 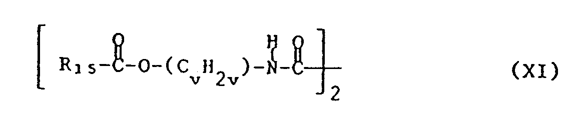 worin R₁₅ die Bedeutung C₁-C₁₈-Alkyl, Phenyl, C₇-C₉-Aralkyl hat oder eine Gruppe der Formel VIII ist, und v ist eine ganze Zahl von 1 bis 6; wobei das Gewichtsverhältnis der Komponenten (a):(b) 20:1 bis 1:10 beträgt, mit der Maßgabe, daß die Komponente (b) nicht Oxalyldihydrazidsalicylsäure-bishydrazid ist, wenn die Komponente (a) Bis(2-hydroxy-3-tert-butyl-5-methylphenyl)methan ist.

2. Zusammensetzung nach Anspruch 1, worin das gehinderte Phenol der Formel I, II, III, IV, V oder VI entspricht.

3. Zusammensetzung nach Anspruch 1, worin das gehinderte Phenol der Formel I entspricht.

4. Zusammensetzung nach Anspruch 1, worin das gehinderte Phenol der Formel I entspricht, und X ist Sauerstoff, b ist eine ganze Zahl von 0 bis 2, R₂ und R₃ sind unabhängig C₁-C₈-Alkyl, A ist Sauerstoff, y ist 2 und R₄ ist Wasserstoff oder eine Gruppe der Formel Ib.

5. Zusammensetzung nach Anspruch 4, worin R₂ und R₃ die Bedeutung tert-Butyl mit der Position ortho zur Hydroxygruppe haben, und b ist 2.

6. Zusammensetzung nach Anspruch 1, worin das gehinderte Phenol der Formel II entspricht.

7. Zusammensetzung nach Anspruch 1, worin das gehinderte Phenol der Formel II entspricht, und R₂ und R₃ sind unabhängig C₁-C₈-Alkyl, b ist 2, d ist 2 oder 4, und Q₁ ist C₂-C₁₀-Alkylen oder Pentaerythrityl.

8. Zusammensetzung nach Anspruch 1, worin das gehinderte Phenol der Formel III entspricht.

9. Zusammensetzung nach Anspruch 1, worin das gehinderte Phenol der Formel III entspricht, und R₂ und R₃ sind unabhängig C₁-C₈-Alkyl, b ist 2 und Q₂ ist C₂-C₆-Alkylen.

10. Zusammensetzung nach Anspruch 1, worin das gehinderte Phenol der Formel IV entspricht.

11. Zusammensetzung nach Anspruch 1, worin das gehinderte Phenol der Formel IV entspricht, und X und Y sind Sauerstoff, b ist eine ganze Zahl von 0 bis 2, R₂ und R₃ sind unabhängig C₁-C₈-Alkyl, z ist 2, e ist eine ganze Zahl von 3 bis 20 und R₅ ist eine Gruppe der Formel Ia.

12. Zusammensetzung nach Anspruch 11, worin R₂ und R₃ die Bedeutung tert-Butyl in ortho-Stellung zur Hydroxygruppe haben.

13. Zusammensetzung nach Anspruch 1, worin das gehinderte Phenol Octadecyl-3-(3',5'-di-tert-butyl-4'-hydroxyphenyl)propionat, 1,6-Hexamethylen-bis[3',5'-di-tert-butyl-4'-hydroxyhydrocinnamat], Tetrakis[methylen-3-(3',5'-di-tert-butyl-4'-hydroxyphenyl)propionat]methan, N,N'-Hexamethylen-bis[3,5-di-tert-butyl-4-hydroxyhydrocinnamid] oder Triethylenglycol-bis [3-(3'-5'-di-tert-butyl-4'-hydroxy-phenyl)propionat] ist.

14. Zusammensetzung nach Anspruch 1, worin in der Komponente (b) R₁₂ und R₁₃ unabhängig C₁-C₁₈-Alkyl oder eine Gruppe der Formel VIII sind, Z ist eine Direktbindung oder C₁-C₆-Alkylen, und die Reste R₁₄ sind unabhängig C₄-C₈-Alkyl , C₅-C₆-Cycloalkyl, Phenyl oder Benzyl.

15. Zusammensetzung nach Anspruch 14, worin das OH in der Gruppe der Formel VIII entweder in 2- oder in 4-Stellung angeordnet ist.

16. Zusammensetzung nach Anspruch 15, worin das OH in der Gruppe der Formel VIII in der para-Stellung angeordnet ist, x ist 2 und jedes R₁₄ ist tert-Butyl, angeordnet ortho zur OH-Gruppe.

17. Zusammensetzung nach Anspruch 1, worin das Hydrazin 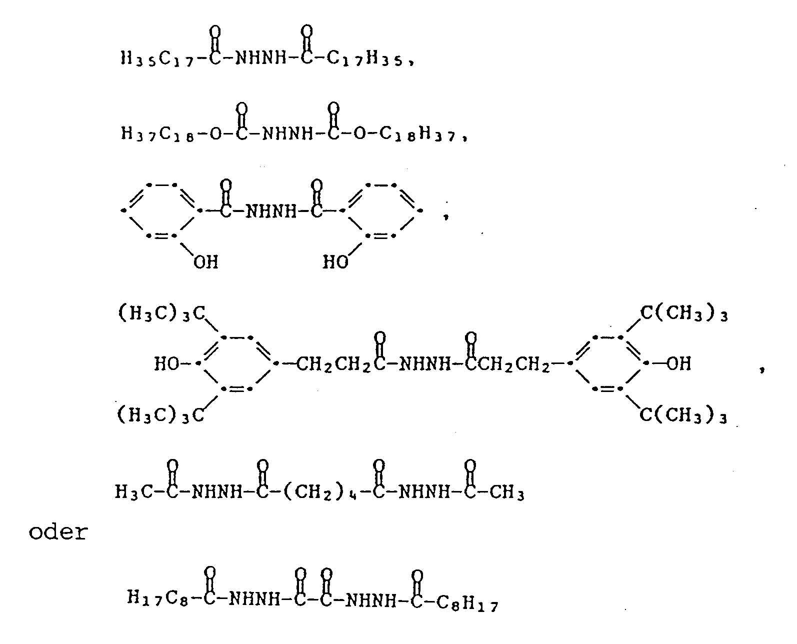 ist.

18. Zusammensetzung nach Anspruch 1, worin das gehinderte Phenol 1,6-Hexamethylen-bis[3,5-di-tert-butyl-4-hydroxyhydrocinnamat] ist und die Hydrazinverbindung ist N,N'-Bis[β-(3,5-di-tert-butyl-4-hydroxyphenyl)propionyl]hydrazin.

19. Zusammensetzung nach Anspruch 1, die als Komponente (b) eine Verbindung der Formel XI enthält.

20. Zusammensetzung nach Anspruch 19, worin die Komponente (b) 2,2'-Oxamido-bis[ethyl-3(3',5'-di-tert-butyl-4'-hydroxyphenyl)propionat ist.

21. Zusammensetzung nach Anspruch 1, die zusätzlich einen basischen Co-Stabilisator enthält, ausgewählt aus der Gruppe, die aus Calciumcitrat, Melamin, Cyanoguanidin, Polyamiden, Alkali- und Erdalkalimetallsalzen von Fettsäuren, Aminen, Phosphiten, Phosphoniten und Peroxid-zerstörenden Verbindungen besteht.

22. Verfahren zur Stabilisierung eines Acetal-Homo- oder Copolymeren gegen thermischen oder oxidativen Abbau, gekennzeichnet durch Einbeziehung der Komponenten (a) und (b) gemäß Anspruch 1 in das Acetal.

23. Verfahren zur Verringerung der Farbbildung in Acetal-Homo- oder Copolymeren, die die Komponente (a) gemäß Anspruch 1 enthalten, gekennzeichnet durch Einbeziehung in das Acetal einer Homo- oder Copolymerkomponente (b) wie in Anspruch 1 definiert.

## Revendications

1. Composition d'homo- ou copolymère d'acétal qui comprend :
(a) un phénol à empêchement stérique correspondant à la formule I, II, III, IV, V, VI ou VII
R₁X-(CₐH₂ₐ)-Q (I)
où R₁ est un groupe de formule Ia 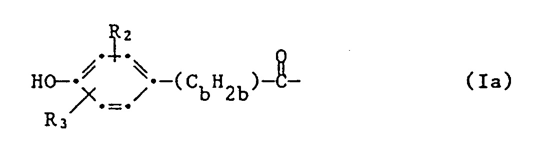 X est un oxygène ou un soufre, a est un entier de 6 à 30, b est un entier de 0 à 6, R₂ et R₃, indépendamment l'un de l'autre, sont chacun un radical alkyle en C₁₋₁₈, cycloalkyle en C₅₋₁₂, phényle ou aralkyle en C₇₋₉, et R₂ est aussi un hydrogène, Q est un hydrogène ou -A-(C_{y}H_{2y})-R₄, A est un oxygène, un soufre ou 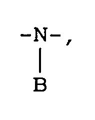 y est un entier de 2 à 20,
B est un radical alkyle en C₁₋₄ ou alcanoyle C₁₋₄, et R₄ est un hydrogène ou un radical hydroxy, alcanoyloxy en C₁₋₄ ou un groupe de formule Ib 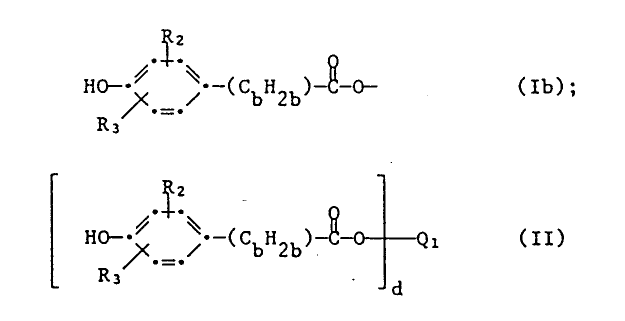 où R₂, R₃ et b sont tels que définis ci-dessus, d est un entier de 2 à 6, et Q₁ est un hydrocarbure aliphatique d-valent ayant de 1 à 18 atomes de carbone, un hydrocarbure aromatique ou aromatique-aliphatique d-valent ayant de 6 à 20 atomes de carbone, ou un groupe de formule IIa 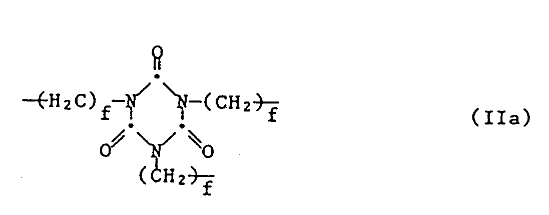 où f est un entier de 1 à 4 ; 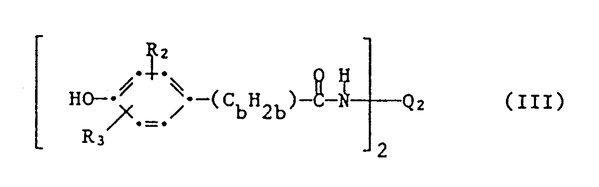 où R₂, R₃ et b sont tels que définis ci-dessus, et Q₂ est un radical alkylène en C₁₋₁₈ ; 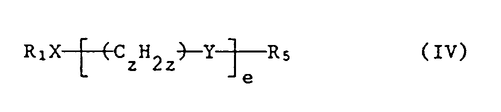 où R₁ et X sont tels que définis ci-dessus, z est un entier de 2 à 6, e est un entier de 3 à 40, Y est un oxygène ou un soufre, et R₅ est un hydrogène, un radical alkyle en C₁₋₄ ou un groupe de formule Ia ; 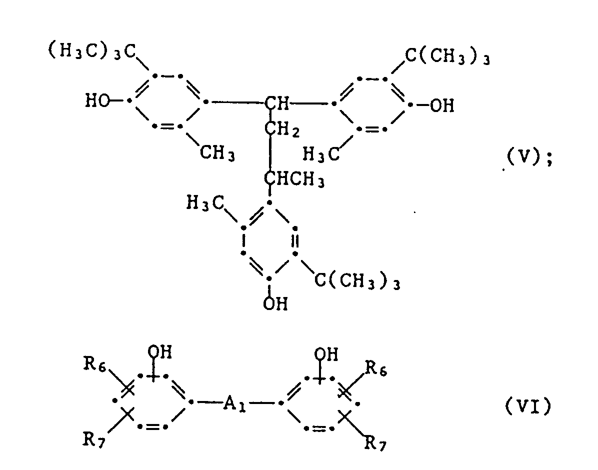 où R₆ et R₇, indépendamment l'un de l'autre, sont chacun un radical en C₁₋₁₈, cycloalkyle en C₅₋₁₂, phényle ou aralkyle en C₇₋₉, et R₆ est aussi un hydrogène, et A₁ est un groupe 〉C(R₈)R₉, où R₈ et R₉, indépendamment l'un de l'autre, sont chacun un hydrogène ou un radical alkyle en C₁₋₆ ; 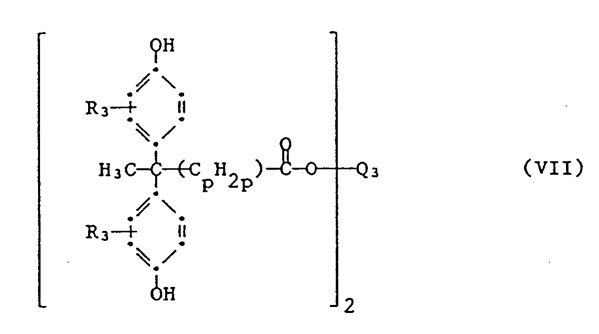 où R₃ est tel que défini ci-dessus, p vaut 1 ou 2, et Q₃ est un radical alkylène en C₂₋₁₀ ; et
(b) une hydrazine correspondant à la formule IX 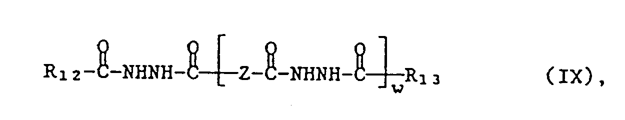 dans laquelle R₁₂ et R₁₃, indépendamment l'un de l'autre, sont chacun un radical alkyle en C₁₋₁₈, alkyloxy en C₁₋₁₈, phényle, aralkyle en C₇₋₉, ou un groupe de formule VIII 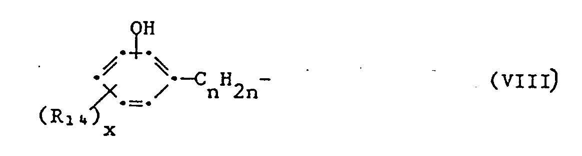 Z est une liaison directe ou un radical alkylène en C₁₋₁₈ ou phénylène, les radicaux R₁₄, indépendamment les uns des autres, sont chacun un radical alkyle en C₁₋₁₈, cycloalkyle en C₅₋₁₂, phényle ou aralkyle en C₇₋₉, w vaut 0 ou 1, x est un entier de 0 à 4 et n est un entier de 0 à 6, du moment que x est différent de 0 quand w vaut 1 ; ou
un composé oxamido de formule XI 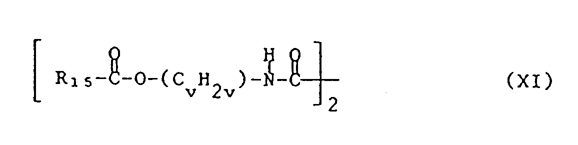 où R₁₅ est un radical alkyle en C₁₋₁₈, phényle, aralkyle en C₇₋₉ ou un groupe de formule VIII, et v est un entier de 1 à 6 ; le rapport pondéral des constituants (a):(b) est de 20:1 à 1:10, du moment que le constituant (b) n'est pas le bishydrazine oxalyldihydrazide-salycylique si le constituant (a) est le bis(2-hydroxy-3-tert-butyl-5-méthyl-phényl)-méthane.

2. Composition selon la revendication 1, dans laquelle le phénol à empêchement stérique correspond à la formule I, II, III, IV, V ou VI.

3. Composition selon la revendication 1, dans laquelle le phénol à empêchement stérique correspond à la formule I.

4. Composition selon la revendication 1, dans laquelle le phénol à empêchement stérique correspond à la formule I, et X est un oxygène, b est un entier de 0 à 2, R₂ et R₃, indépendamment l'un de l'autre, sont chacun un radical alkyle en C₁₋₈, A est un oxygène, y vaut 2 et R₄ est un hydrogène ou un groupe de formule Ib.

5. Composition selon la revendication 4, dans laquelle R₂ et R₃ sont des radicaux tert-butyle placés en position ortho par rapport au groupe hydroxyle, et b vaut 2.

6. Composition selon la revendication 1, dans laquelle le phénol à empêchement stérique correspond à la formule II.

7. Composition selon la revendication 1, dans laquelle le phénol à empêchement stérique correspond à la formule II, et R₂ et R₃, indépendamment l'un de l'autre, sont chacun un radical alkyle en C₁₋₈, b vaut 2, d vaut 2 ou 4, et Q₁ est un radical alkylène en C₂₋₁₀ ou pentaérythrityle.

8. Composition selon la revendication 1, dans laquelle le phénol à empêchement stérique correspond à la formule III.

9. Composition selon la revendication 1, dans laquelle le phénol à empêchement stérique correspond à la formule III, et R₂ et R₃, indépendamment l'un de l'autre, sont chacun un radical alkyle en C₁₋₈, b vaut 2 et Q₂ est un radical alkylène en C₂₋₆ .

10. Composition selon la revendication 1, dans laquelle le phénol à empêchement stérique correspond à la formule IV.

11. Composition selon la revendication 1, dans laquelle le phénol à empêchement stérique correspond à la formule IV, et X et Y sont des oxygènes, b est un entier de 0 à 2, R₂ et R₃, indépendamment l'un de l'autre, sont chacun un radical alkyle en C₁₋₈, z vaut 2, e est un entier de 3 à 20, et R₅ est un groupe de formule Ia.

12. Composition selon la revendication 11, dans laquelle R₂ et R₃ sont des radicaux tert-butyle en position ortho par rapport au groupe hydroxy.

13. Composition selon la revendication 1, dans laquelle le phénol à empêchement stérique est le 3-(3',5'-di-tert-butyl-4-hydroxyphényl)propionate d'octadécyle, le bis[3',5'-di-tert-butyl-4'-hydroxyhydrocinnamate] de 1,6-hexaméthylène, le tétrakis[3-(3',5'-di-tert-butyl-4'-hydroxyphényl)propionate de méthylène]-méthane, le N,N'-hexaméthylène-bis[3,5-di-tert-butyl-4-hydroxyhydrocinnamamide] ou le bis[3-(3',5'-di-tert-butyl-4'-hydroxyphényl)propionate] de triéthylèneglycol.

14. Composition selon la revendication 1, dans laquelle, dans le constituant (b), R₁₂ et R₁₃, indépendamment l'un de l'autre, sont chacun un radical alkyle en C₁₋₁₈ ou un groupe de formule VIII, Z est une liaison directe ou un radical alkylène en C₁₋₆, et les radicaux R₁₄, indépendamment les uns des autres, sont chacun un radical alkyle en C₄₋₈, cycloalkyle en C₅₋₆, phényle ou benzyle.

15. Composition selon la revendication 14, dans laquelle le groupement OH du groupe de formule VIII est placé en position 2 ou 4.

16. Composition selon la revendication 15, dans laquelle le groupement OH du groupe de formule VIII est placé en position para, x vaut 2, et chaque radical R₁₄ est un radical tert-butyle en position ortho par rapport au groupe OH.

17. Composition selon la revendication 1, dans laquelle l'hydrazine est

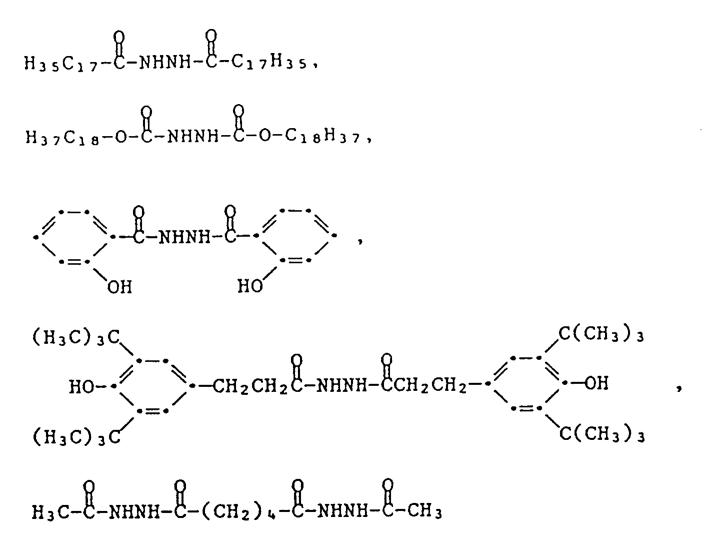

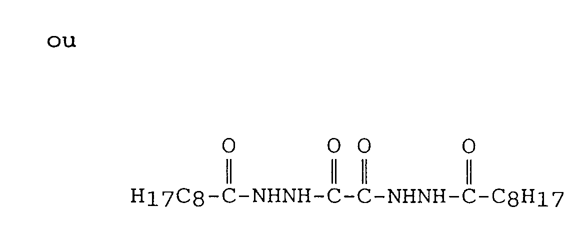

18. Composition selon la revendication 1, dans laquelle le phénol à empêchement stérique est le bis-[3,5-di-tert-butyl-4-hydroxyhydrocinnamate] de 1,6-hexaméthylène et l'hydrazine est la N,N'-bis[β-(3,5-di-tert-butyl-4-hydroxyphényl)propionyl]hydrazine.

19. Composition selon la revendication 1, comprenant comme constituant (b) un composé de formule XI.

20. Composition selon la revendication 19, dans laquelle le constituant (b) est le 2,2'-oxamido-bis[3-(3',5'-di-tert-butyl-4'-hydroxyphényl)propionate d'éthyle].

21. Composition selon la revendication 1, qui contient en outre un costabilisant de base choisi parmi l'ensemble comprenant le citrate de calcium, la mélamine, la cyanoguanidine, les polyamides, les sels de métaux alcalins et alcalino-terreux d'acides gras, les amines, les phosphites, les phosphonites et les composés détruisant les peroxydes.

22. Procédé de stabilisation d'un homo- ou d'un copolymère d'acétal vis-à-vis d'une dégradation thermique ou par oxydation, qui consiste à incorporer dans l'acétal les constituants (a) et (b) selon la revendication 1.

23. Procédé pour réduire la formation de couleur dans des homo- ou copolymères d'acétals contenant le constituant (a) selon la revendication 1, qui consiste à incorporer dans les homo- ou copolymères d'acétals le constituant (b) tel que défini dans la revendication 1.
